# EUROPEAN PATENT APPLICATION

(11) **EP 1 059 799 A2**
(43) Date of publication of application: **13.12.2000**
(21) Application number: 00111849.6
(22) Date of filing: 08.06.2000
(51) Int. Cl.: H04N 1/00

(54) **Digital photo-booth**

(30) Priority: 09.06.1999 IT BO990313
(71) Applicant: Gipco S.R.L., 47100 Forli (IT)
(72) Inventor: Tumidei, Daniele, 47100 Forli (IT)
(74) Representative: Dall'Olio, Giancarlo

(57) **Abstract**

A digital photo-booth (F) includes a video camera (A) for picking up images of a user (3) situated at a pick up line (2), a processing unit (6) for acquiring and processing these images, a monitor (V) for displaying the acquired images and an image reproduction and printing group (7). The video camera (A) is arranged with its pick up axis (4) angularly offset with reference to the pick up line (2) and the monitor (V) is situated beside the same video camera. Between the video camera (A) and the user (3) there is a reflection system (1), in a position such that it can be seen by the user (3) being framed, the system including one mirror (11). The mirror (11) has the task of reflecting the image of the user (3) towards the video camera (A) and the image displayed by the monitor (V) towards the user, without any interference of the two images.

## Description

The present invention relates to the technical field concerning automatic apparatuses for making photographic printings.

More particularly, the present invention concerns a digital photo-booth for acquiring and reproducing images.

It is known that, currently, the facilities designed to the digital reproduction of images include a video camera for producing a digital image of a person, a processing unit, a monitor for the display of the acquired image and a reproduction and printing unit, capable of producing a paper copy of the person image as acquired and elaborated.

The video camera is usually positioned inside such facility, in proximity and in front of the person or user whose photo must be shot. The shot image is acquired from the processing unit, that displays it on the monitor. In this way, the subject as framed can assume a preferred position and, through a command sent to the processing unit, decide the moment in which the image must be shot. At this point, the image is stored in a memory area of the processing unit, and possibly elaborated by it in accordance with pre-selected techniques. The user can preview the photo as it will be printed, appraise the assumed position, the shot, the brightness and other characteristics of the picture, and possibly cancel the operation and choose another position. Only when the user is satisfied of the acquired image he will command the print.

The processing unit, once received confirmation on the image to print, operates the printing group so that this image is reproduced on a photosensitive support.

The monitor for the display of the acquired image is located, according to the chosen technique, so as to face the video camera and the face of the subject being framed, or slightly offset with reference to the same video camera. In this last case, the user does not look directly into the video camera, but usually, this is not a serious drawback (this solution is disclosed for instance in the document EP-A-0 269 022).

However, there are known apparatuses which include measures for maintaining the sight of the user in axis with the video camera. For instance, one of them includes a particular monitor, that has a central hole in which the video camera is set. Another solution, described in the document US-A-4 864 410, includes a monitor turned at 90° with regard to the optic axis of the video camera, and the displayed image is reflected in direction of the aforesaid optic axis, and therefore toward the user, by means of a semitransparent mirror positioned at 45° with respect to the same optic same axis.

This last solution, particularly, has some drawbacks, which limit the quality of the picked up image. In fact, the semitransparent mirror causes an attenuation of the intensity of the image received from the video camera and a chromatic distortion thereof, although limited. Moreover, according to the degree of the mirror semitransparence, there could be an interference between the image of the user and the image displayed by the monitor, which is therefore partially intercepted from the video camera. Unpleasant effects of overlapped images and colours could be picked up in this way.

However, in all the apparatuses produced so far, a more evident and detrimental drawback can be found which affects the quality of the printed photo. The video camera must be always positioned at a short distance from the subject being framed, and therefore the optic path of the image results very short. Due to this fact, wide angle lenses are necessary. Unless expansive lenses are used, which is unreasonable with facilities of this type, this brings about evident distortions of the image, in which the central part appears magnified as regards the peripheral zones.

The object of the present invention is to propose a digital photo-booth that overcomes the drawbacks mentioned above and guarantees an accurate and proportionate reproduction of the framed user.

Another object of the present invention is to propose a digital photo-booth in which the video camera can be positioned in such a way that it is easily accessible, and therefore easily checked by the maintenance and technical assistance operator.

The above mentioned objects are entirely obtained in accordance with the content of the claims.

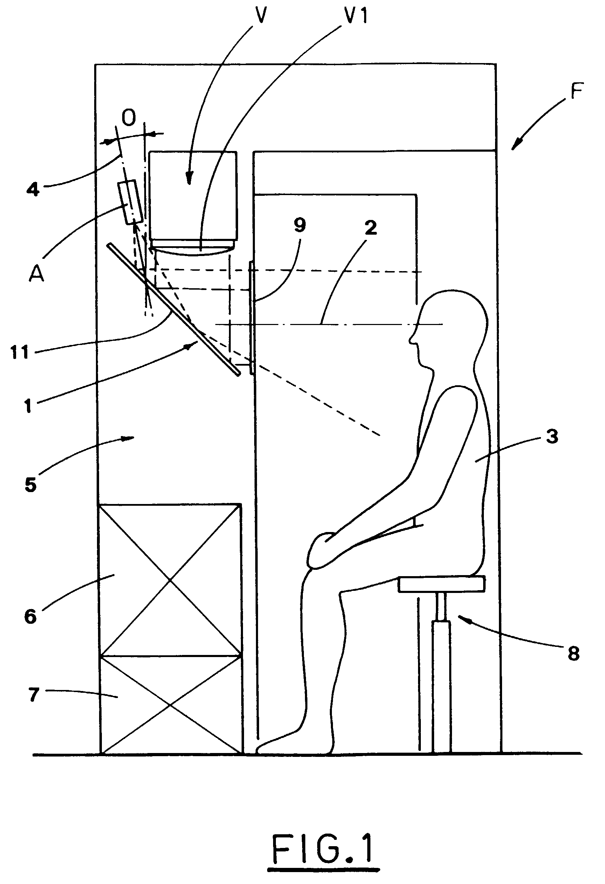

The features of the invention will become evident in the following with reference to a preferred, but not exclusive, embodiment, and to the accompanying drawing, in which Figure 1 is a schematic side view of the proposed photo-booth.

The photo-booth F is aimed at taking automatically one or more photos of a user 3, usually upon payment of a predetermined price by the same user 3.

Inside the photo-booth F there is a seat 8, on which the user 3 sits. The seat 8 can be adjusted in height in such a way as to arrange the head of the user at an ideal pick up line 2, approximately horizontal.

Inside a room 5, made at the opposite side of the photo-booth F with regard to the seat 8, there are placed a processing unit 6, a printing group 7, a monitor V and a video camera A.

The processing unit 6 and the printing group 7 are shown in extremely schematic way, as they have been made and disposed according to known techniques and they are not a part of the invention.

The monitor V is situated in the upper part of the room 5, suitably fixed to a wall thereof in adjustable way, with the screen V1 turned downward.

The video camera A is located near the monitor V, also fixed to a wall of the room 5 in suitably adjustable way. The axis 4 of the camera is directed toward the lower part, with an appropriate angle that will be better specified later on.

A reflecting system 1, situated under the video camera A and the monitor V, is aimed at reflecting the image of the user 3 toward the video camera A, and to reflect also the image displayed by the monitor V toward the user 3, along the pick up line 2.

According to the embodiment illustrated in figure 1, the reflecting system 1 includes a single flat mirror 11. It is fastened, in such a way as to allow the adjustment of the inclination angle when mounted, to an inside wall of the room 5, at a height level equal to the level of the pick up line 2 and therefore in front of the face of the user 3. The mirror 11 is oriented at about 45°. This inclination is such as to reflect the image deriving from the top, as displayed by the monitor V, along the same pick up line and, at the same time, to reflect upwards the image of the user 3.

The video camera A, as already specified, is placed beside the monitor V, and has its optic axis 4 inclined with respect to the vertical by a predetermined angle O, so as to allow the lenses of the camera to pick up the image of the user 3 reflected by the mirror 11.

It is obvious that the video camera A could be situated at a greater distance from the mirror 11 than represented in the figure 1, provided it does not exceed the dimension of the photo-booth F, so as to increase the optic path of the image being picked up. In this case the focal length of the video camera A lenses will be properly selected, in order to maintain an optimal shot field.

The video camera A, the reflecting system 1 and the monitor V are suitably situated behind a protective transparent barrier 9.

When a user 3 wants to use the photo-booth F, he or she sits down on the seat 8, after having adjusted its height.

Now, the image of the user 3 reaches the mirror 11, where it is reflected upwards and is picked up by the video camera A.

The video camera transmits the image to the processing unit 6, which displays the same on the monitor V. From the monitor, the image is brought again, due to reflection by the mirror 11, to the user 3, who can directly see the image picked up by the video camera A.

The following steps including acquisition, choice and printing of the photo of the user 3 are the same as in the known and typical apparatuses of this type, and they will not be described in detail.

However, it must be noted that the reflecting system 1 allows to position the video camera A very distant from the user 3, and the optical path of the camera can be made advantageously longer, because of the reflections. In this way, it is possible to use lenses with bigger focal length, and avoid visible distortions of the image.

Obviously, it is understood that, on the base of the above explained principle, the reflecting system could comprise one or more additional mirrors.

These mirrors are aimed at reflecting the image of the user 3 and orient it according to predetermined directions, so as to set it in direction of the optic axis of the video camera A. This makes the optic path longer for the aforesaid image, and the video camera can be placed farther from the user 3.

According to the embodiment described above, also the image coming from the monitor V can be reflected by the mirror 11. This would be a preferred configuration of the sane monitor V, but according to the present invention, the monitor V can be situated in such a way as to be directly seen by the user 3, for instance immediately under the mirror 11.

Furthermore, the video camera A could be disposed inside the photo-booth F differently from the already described position, for instance beside the pick up line 2. The operation of the video camera and the consequent advantages would be, in this case, unchanged.

## Claims

1. Digital photo-booth including:
at least a video camera (A), for picking up the image of an user (3) situated inside said photo-booth (F) on a seat (8), with the face located at level of a horizontal pick up line (2);
at least one image acquisition and processing unit (6), situated inside said photo-booth (F) and connected to said video camera (A);
at least one monitor (V), situated in said photo-booth (F) for displaying the picked up image, the monitor being controlled by said acquisition and elaboration unit (6);
an image printing group (7), controlled by said image acquisition and processing unit (6), for printing said image according to pre-selected sequences;
said photo-booth (F) being characterised in that said video camera (A) and monitor (V) are arranged with the respective optic axes (4) angularly offset with respect said pick up line (2), and that a reflecting system (1) is situated between said video camera and user subject (3), along an optic path from said user (3) to said camera (A), for reflecting the image of the user toward said video camera (A).

2. Photo-booth according to claim 1, characterised in that said reflecting system (1) includes one single mirror (11).

3. Photo-booth according to claims 1, characterised in that the said monitor (V) is placed beside said video camera (A), with the screen (V1) turned toward said reflecting system (1) with an inclination such that the image displayed by the said monitor (V) is reflected toward the above-mentioned user (3).

4. Photo-booth according to claim 2, characterised in that the said mirror (11) is arranged in front of the face of the user (3), with an inclination angle substantially of 45° with reference to the said pick up line (2), and that the said video camera (A) is turned toward the said mirror (11).

5. Photo-booth according to claims 2 or 3, characterised in that the said mirror (11) is arranged in front of the face of the user (3), with an inclination angle substantially of 45° with reference to said pick up line (2), and that the said video camera (A) and monitor (V) are arranged side by side and turned toward said mirror (11).

6. Photo-booth according to claim 5, characterised in that the said video camera (A) and monitor (V) are located in the upper part of the said photo-booth (F).
